Europäisches Patentamt

European Patent Office

Office européen des brevets

(19)

(11) Numéro de publication: **0 078 733**
**B1**

(12) # FASCICULE DE BREVET EUROPEEN

(45) Date de publication du fascicule du brevet:
02.04.86

(51) Int. Cl.⁴: **C 03 B 37/025,** C 03 B 37/02,
C 03 C 25/02

(21) Numéro de dépôt: 82401951.7

(22) Date de dépôt: 22.10.82

(54) Procédé de fabrication d'un objet à structure chiralique issu à partir d'une source de matière formable, et dispositif mettant en oeuvre ce procédé.

(30) Priorité: 03.11.81 FR 8120596

(43) Date de publication de la demande:
11.05.83 Bulletin 83/19

(45) Mention de la délivrance du brevet:
02.04.86 Bulletin 86/14

(84) Etats contractants désignés:
**DE GB NL SE**

(56) Documents cités:
**DE - A - 2 855 337**
**DE - B - 3 010 005**

(73) Titulaire: **THOMSON-CSF, 173, Boulevard Haussmann,**
**F-75379 Paris Cedex 08 (FR)**

(72) Inventeur: **Gauthier, Francis, THOMSON-CSF**
**SCPI 173, bld Haussmann, F-75379 Paris Cedex 08 (FR)**

(74) Mandataire: **Lepercque, Jean et al, THOMSON-CSF**
**SCPI 19, avenue de Messine, F-75008 Paris (FR)**

ACTORUM AG

## Description

La présente invention se rapport à un procédé de fabrication d'un objet issu d'une source de matière formable, par exemple visqueuse ou plastique et présentant une structure chiralique et à un dispositif mettant en œuvre ce procédé.

Dans la suite de la description on dénommera cet objet formé par étirage ou tout autre procédé sous le nom de «fibre», mais ce terme n'est pas limitatif aux fibres optiques.

Les fibres monomodes fabriquées habituellement pour les télécommunications présentent toujours une petite quantité de biréfringence linéaire, et de biréfringence circulaire. Par suite ces fibres ne conservent ni la polarisation linéaire, ni la polarisation circulaire.

Il est possible de rendre la fibre très biréfringente linéaire en cassant la symétrie circulaire au profit d'une symétrie planaire.

Il est également possible de considérer une méthode inverse, qui consiste à introduire une biréfringence circulaire élevée de façon à conserver la polarisation circulaire.

Une solution pour créer cette polarisation circulaire consiste à soumettre la fibre de verre à une contrainte statique de torsion, par exemple appliquée extérieurement par torsion entre ses deux extrémités: un effet de la torsion de cette fibre est d'introduire une biréfringence circulaire dans celle-ci.

La présente invention a pour objet un procédé permettant de conserver un état de torsion au moyen d'une enveloppe jouant le rôle de frette. Elle permet d'obtenir une fibre de structure hélicoïdale ou structure chiralique. Mais cette fibre peut être de section quelconque, elle peut ainsi avoir une géométrie complexe.

Si on considère une fibre présentant une symétrie hélicoïdale, dont un procédé de fabrication fait l'objet de la demande de brevet déposée ce jour au nom de la demanderesse et intitulée: «Procédé d'obtention d'un objet à structure chiralique issu de l'étirage à partir d'une source de matière ramollie et dispositif mettent en œuvre un tel procédé», (EP-A- 0 078 732) il est possible d'obtenir une fibre dont les propriétés, et les structures seront mieux contrôlées, et qui ne présentera pas un certains nombre de défauts inhérents à la technique antérieure. Ce procédé consiste à faire subir une torsion à l'objet au cours de son étirage et simultanément une trempe qui permet de figer une partie des contraintes ainsi obtenues.

Une fibre obtenue par simple étirage et torsadée après sa solidification peut présenter une fatigue statique, c'est à dire qu'elle peut vieillir et des microfissures éventuelles peuvent ainsi se propager dans sa structure interne jusqu'à déclencher la rupture de l'objet.

Pour pallier à cet inconvénient on enduit, selon l'invention, la fibre d'un matériau durcissable qui permet de figer l'état initial de cette fibre, et de la protéger des agressions mécaniques et chimiques de l'environnement.

On connaît par ailleurs d'après le brevet DE-B- 3 010 005 un procédé de fabrication de fibre optique qui comprend des étapes d'étirage, de torsion et d'enduction. Cependant la torsion de la fibre optique s'effectue sur une portion de celle-ci traversant des moyens d'enduction successifs. Il n'y a pas de trempe effectué immédiatement après enduction.

Selon l'invention, on fige la torsion immédiatement après la torsions.

L'invention a donc pour objet un procédé de fabrication d'un objet à structure chiralique à partir d'une source de matière formable comprenant les étapes d'étirage suivant un axe et de torsion de l'objet autour dudit axe d'étirage et d'enduction de l'objet par un produit en fusion, formant une enveloppe jouant le rôle de frette, caractérisé en ce que les étapes d'étirage et de torsion sont réalisées avant l'étape d'enduction et en ce que l'étape d'enduction est suivie immédiatement d'une étape de trempe par refroidissement dudit objet.

Elle a, en outre pour objet un dispositif de fabrication mettent en œuvre un tel procédé, comme indiqué dans la revendication 8.

L'invention sera mieux comprise et d'autres caractéristiques apparaitront au moyen de la description qui suit en se reportant aux figures qui l'accompagnent parmi lesquelles:

– la figure 1 illustre schématiquement le procédé de l'invention;

– la figure 2 illustre un aspect particulier d'un procédé de l'art antérieur;

– la figure 3 illustre un aspect particulier du procédé de fabrication selon l'invention;

– la figure 4 illustre le procédé de fabrication selon l'invention;

– la figure 5 illustre une variante du procédé de fabrication selon l'invention;

– la figure 6 illustre une variante d'un aspect particulier du procédé de fabrication selon l'invention,

– la figure 7 illustre la structure de la fibre obtenue par ce procédé;

– les figures 8 et 9 illustrent les moyens d'étirage et de torsion de la fibre.

A partir d'une fibre hélicoïdale torsadée et de la machine qui permet de la fabriquer, comme décrite dans la demande de brevet déposée ce jour au nom de la demanderesse et intitulée: «Procédé d'obtention d'un objet à structure chiralique à partir d'une source de matière ramollie, et dispositif mettant en œuvre un tel procédé», (EP-A- 0 078 732) il est proposé le moyen suivant pour obtenir une fibre à conservation de polarisation circulaire.

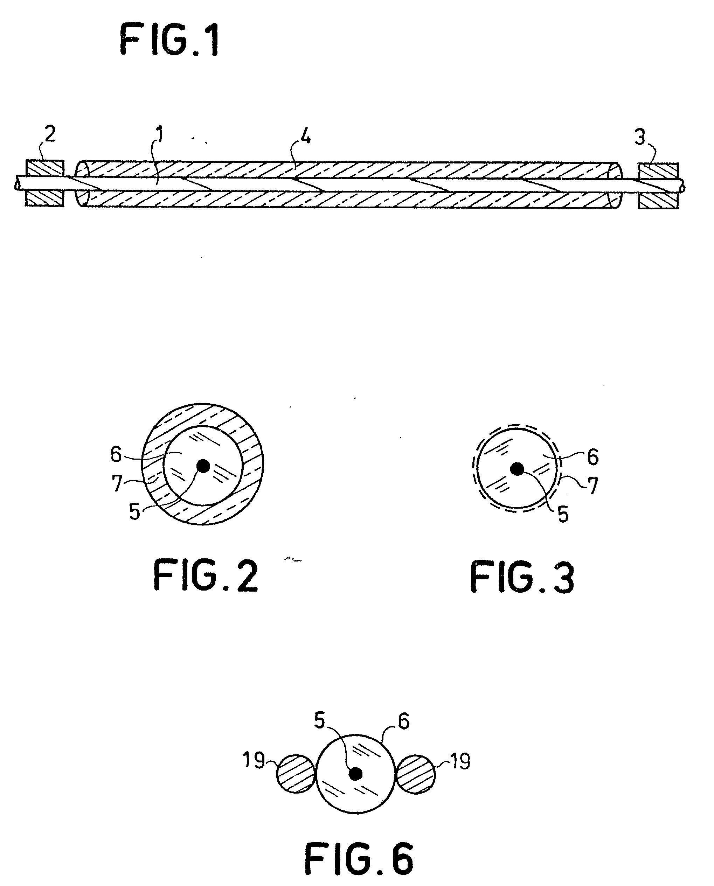

En considérant une fibre 1 déjà fabriquée, en partant d'une préforme par exemple, et par simple étirage, si on tord un grand nombre de tours en la maintenant à ses deux extrémités, il ne reste plus qu'à «l'immobiliser», pour qu'elle garde ses propriétés de conservation de polarisation, par un frettage rigide rapporté par exemple, comme représenté à la figure 1.

Cette figure 1 est une figure illustrant schématiquement le procédé de l'invention.

Elle représente une fibre déjà fabriqué qui a été ensuite torsadée, en étant maintenue à ses extrémités 2 et 3, une frette rigide 4 étant alors rapportée pour l'immobiliser.

Selon le procédé de l'invention, pour réaliser ce maintien par frettage, il est proposé d'enduire la fibre torsadée pendant sa fabrication, ou après sa fabrication, d'un matériau qui en se solidifiant fige l'état torsadé de la fibre.

Ainsi, le fait d'enduire la fibre une fois qu'elle a été torsadée permet simultanément de la protéger, de figer la torsion qui a été créée, et d'empêcher le vieillissement du matériau en lui appliquant des contraintes radiales, et d'empêcher les fissures éventuelles d'évoluer.

Cette enduction peut être en verre, en vitro-céramique, en plastique ou même en métal. L'avantage d'une enduction en verre réside dans le fait qu'il y a compatibilité chimique et mécanique entre la fibre torsadée et l'enveloppe ou frette qui est déposée à sa surface, ce qui empêche le vieillissement. De plus le verre refroidi trempé a un temps de relaxation très long, ce qui permet de supprimer tout relâchement mécanique de la fibre enduite et ainsi de conserver le pouvoir rotatoire de cette fibre.

Sur la figure 2, une section de préforme de fibre monomode classique obtenue par la technique de dépôt chimique en voie gazeuse dite «M.C.V.D.» a été représentée. Elle comporte un cœur 5, une gaine optique 6 et une gaine mécanique 7 de silice constituée par le tube de départ.

Sur la figure 3 une préforme pour enduction selon l'invention a été représentée. La gaine mécanique 7 a été supprimée partiellement ou totalement.

Par exemple une fibre peut être fabriquée à partir d'une préforme obtenue par la technique dite «M.C.V.D.» dont on a dissous le tube de silice de départ à l'acide fluorhydrique afin d'augmenter l'effet de torsion et de polarisation.

En fibrant et torsadant cette préforme sans gaine mécanique, on reconstitue par enverrage, selon le procédé de l'invention, une gaine mécanique qui en plus conservera indéfiniment la torsion de la partie guidante et ses qualités optiques polarisantes. Pour ce faire on passe la fibre dans un enducteur de verre fondu.

On choisit la composition de verre de frettage pour assurer:

– une bonne adhérence sur la gaine optique, ou le résidu de gaine mécanique de silice;

– une mise sous contrainte de compression radiale de la fibre au refroidissement de ce verre de frette, qui assurera l'insensibilité de la fibre finale aux contraintes extérieures d'environnement et de conditionnement. Pour ce faire, on utilisera un verre ou un vitro-céramique à fort coefficient de dilatation.

Il existe plusieurs méthodes de fabrication des fibres optiques. La méthode dite du «doubles creuset» part du matériau fondu qui est étiré sous forme de fibre. Les autres procédés de fabrication donnent un état intermédiaire; par exemple, le procédé à partir d'une préforme réalise la fibre à une homothétie près. On considère, à titre d'exemple non limitatif, un procédé de ce type pour expliquer le procédé de l'invention.

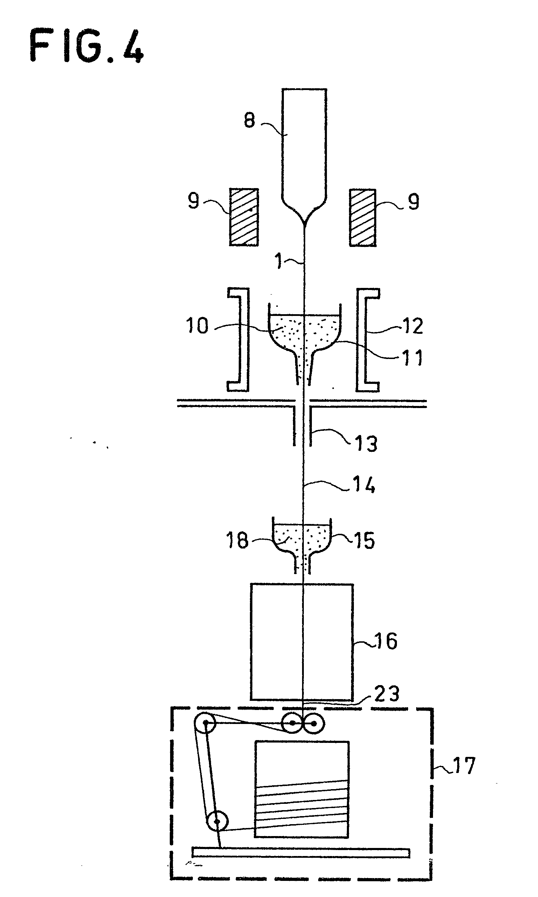

La figure 4 illustre les différents éléments d'une machine de fibrage mettant en œuvre le procédé de l'invention. Ces différents éléments sont les suivants. Une préforme 8 qui est positionnée à l'intérieur des moyens de fusion 9, qui peuvent être un chalumeau, un four à effet Joule, un four à induction hautes, moyennes ou basses fréquences, est à l'origine de la fibre 1. Ces moyens de fu-sion 9 ramollissent la préforme 8. La matière commence à couler et l'on obtient par étirage et torsion une fibre 1. Généralement la préforme utilisée est du type de celle représentée en figure 3.

Un enducteur, représenté en 11 contenant par exemple du verre fondu 10 grâce à des moyens 12 permettant la fusion de ce verre de frette, permet d'enduire la fibre 1 qui est torsadée pendant sa fabrication.

Des moyens de trempage 13 permettent de mémoriser cet état de la fibre 1 en solidifiant le matériau d'enduction.

On obtient en 14 la fibre torsadée et enduite; en 15 et 16 sont représentés des moyens d'enduction de la fibre pour assurer sa protection; ce peut être par exemple une enduction d'une résine époxy ou de métal. En 17 est représenté un dispositif de fibrage permettant d'étirer et de torsader la fibre pendant sa fabrication.

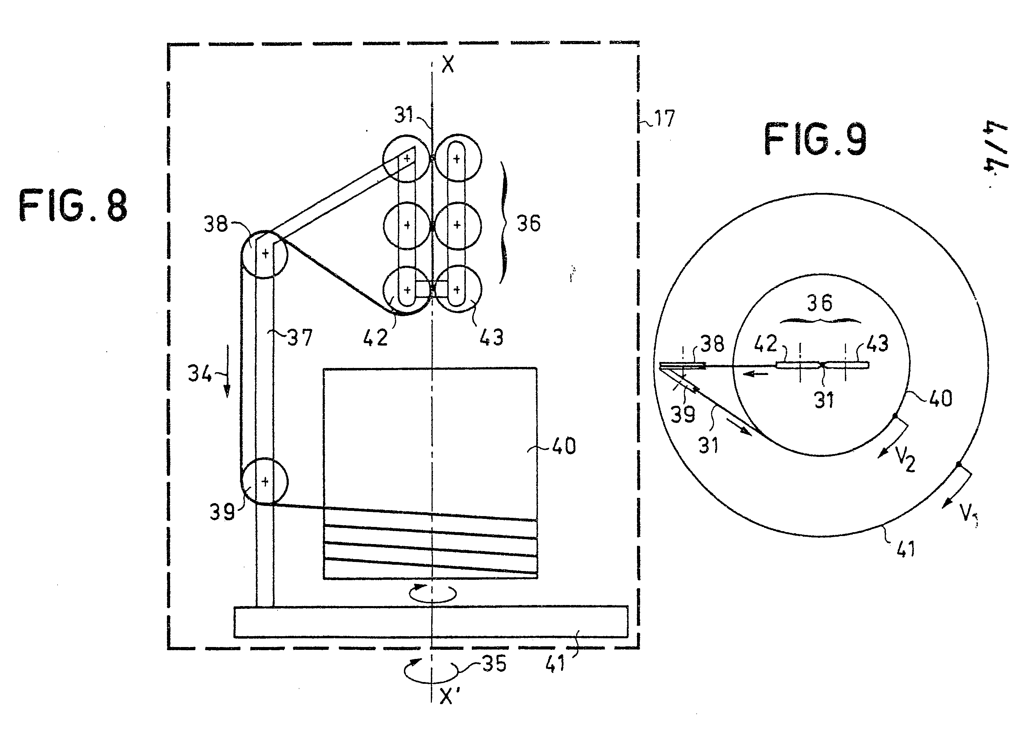

Le dispositif 17, qui correspond à la demande de brevet précitée, est détaillé dans les figures 8 et 9.

La figure 8 est une vue latérale de ce dispositif, la fibre étant tirée verticalement de haut en bas et bobinée horizontalement dans le cadre non limitatif de cet exemple.

La figure 9 est une vue en projection du dispositif suivant l'axe d'étirage et de rotation, vu du côté fibrage.

D'après les figures 8 et 9, la fibre 31 provenant des moyens de formage (non représentés) est pincée dans les galets 42 et 43 du dispositif de tenue 36 entre lesquels elle défile pour être déviée vers les poulies 38 et 39. La poulie 39 peut se translater pour assurer le trancanage de la fibre sur le tambour d'enroulement à axe vertical 40. L'ensemble des galets du dispositif de tenue 36 et des poulies de renvois 38 et 39 est solidaire d'un plateau 41 dont l'axe de rotation XX' est vertical et confondu avec l'axe XX' d'étirage de la fibre 31, à la sortie des moyens de formage. L'axe de rotation du tambour est lui aussi confondu avec cet axe XX'. C'est le cas que l'on considère dans le suite de la description. Mais il pourrait en être différemment dans d'autres types de réalisations. La rotation de l'ensemble formé par le portique 37 qui soutient les poulies et galets et du plateau 41 assure la torsion 35 de la fibre tandis que la rotation du tambour 40 assure l'étirage et l'enroulement.

Les galets 42 et 43 peuvent être tout autre dispositif de pincement permettant l'étirage de la fibre. Ils peuvent être revêtus d'une couche d'un matériau antiglissement: tel qu'un caoutchouc élastomère, du silicone, du néoprène ... pour assurer une bonne adhérence sur la fibre.

Les poulies de renvoi 38 et 39 solidaires du portique en rotation permettent de bobiner la fibre sur le tambour central 40.

Si le tambour 40 et l'ensemble «plateau 41 – portique 37» tournent à la même vitesse il n'y a pas enroulement de la fibre 31 sur le tambour 40. Par contre si le tambour 40 est maintenu à l'arrêt, à un tour de torsion de la fibre 31 correspond un tour d'enroulement de cette fibre 31 sur le tambour 40. Mais le résultat désiré est d'obtenir un grand nombre de tours de la fibre par mètre.

Aussi, si le plateau 41 tourne à une vitesse $V_1$, il tord la fibre à la même vitesse angulaire. Pour pouvoir ajuster le nombre de tours par mètre de fibre produite, on choisit la vitesse $V_2$ du tambour 40 qui permet de déterminer ainsi la vitesse d'enroulement $v = V_1 - V_2$ (ou vitesse de fibrage si elle est exprimée linéairement).

Par les moyens de l'invention, on peut réaliser des fibres ayant figé entre 1 et 1000 tours de torsions par mètre. Les vitesses de fibrage peuvent être réglées entre 1 et 100 m/min.

On peut figer une partie appréciable des contraintes, dues au cisaillement par torsion, ce qui crée dans la fibre un pouvoir rotatoire optique.

Ainsi pour lancer le processus, on commence par étirer la fibre 1 et à la torsader grâce à ce dispositif 17 qui vient d'être décrit. On passe ensuite la fibre à travers le cône d'enduction 11 qui contient par exemple du verre 10 en fusion. On considère un verre à coefficient de dilatation important ce qui permet, lors de la trempe qui suit, une rétraction importante sur la fibre torsadée. Les contraintes extérieures sont généralement négligeables par rapport aux contraintes diamétrales apportées par la frette, et la fibre enduite est insensible au milieu.

On peut alors, si le produit de frettage 10 est du verre ou du vitrocéramique, réaliser une deuxième enduction à partir de l'enducteur 15 d'un matériau 18 de protection qui peut être du plastique ou du métal.

On peut aussi réaliser une seule enduction épaisse s'il s'agit d'une enveloppe en métal, ou en plastique, ce plastique étant un plastique à module d'élasticité assez élevé.

Sur la figure 4, un seul moyen de trempe a été représenté en 13, mais il peut en exister aussi un à la sortie du four 9, lorsque la fibre a été torsadée, pour figer l'état de la fibre.

Les moyens de trempage considérés peuvent être par exemple un rideau d'eau, un panneau rayonnant du froid, un flux de gaz froid. Ce peut être l'air atmosphérique s'il s'agit d'une enduction de verre par exemple.

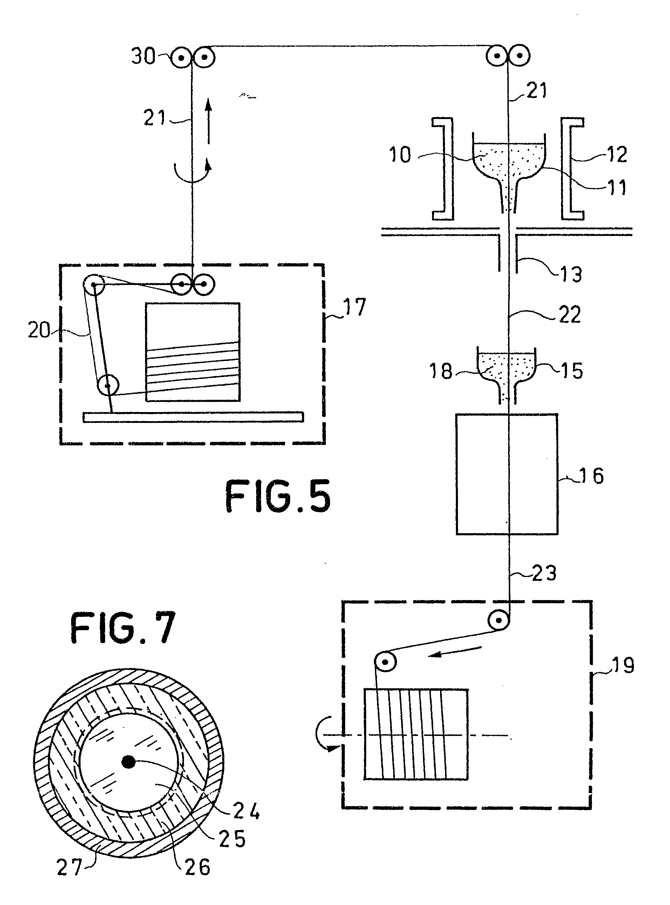

De plus en 16 se trouve un dispositif qui permet la solidification de la couche de protection du matériau 18 appliqué par l'enducteur 15. Ce peut être une polymérisation s'il s'agit par exemple d'une enveloppe en plastique, ce peut être notamment une polymérisation aux rayons ultra-violets ce peut être aussi une trempe. La fibre finale obtenue 23 a une structure telle que celle décrite en figure 7.

Sur la figure 6, deux barreaux 19, de silice par exemple, sont soudés de part et d'autre de la préforme. Par homothétie au fibrage, on obtiendra ainsi une fibre comportant les mêmes éléments. La préforme et la fibre peuvent présenter des géométries identiques ou légèrement différentes selon les conditions de fusion choisies.

La préforme de la figure 6, fibrée par étirage selon l'art antérieur, donnerait une fibre présentant alors un plan de symétrie ce qui permet de conserver la polarisation linéaire; une fois torsadée, on obtient une polarisation linéaire que l'on fait ainsi tourner. L'expérience prouve qu'il est possible de fibrer de telles préformes composites.

On enduit la fibre 1 pour figer cet état torsadé permettant la conservation de polarisation avec un verre de frette 10 à l'aide de l'enducteur 11.

Le contrôle de l'épaisseur de l'enveloppe de verre ou frette se fait en ajustant la viscosité du verre de frette 10 (fonction de la température) et la dynamique du fibrage.

L'enverrage hélicoïdal d'une préforme telle que celle décrite figure 6 ajoute aux effets de contraintes dues à la torsion ceux dûs aux différents coefficients de dilatation des verres en présence, cassant ainsi la symétrie axiale de la fibre 14.

L'enverrage rectiligne d'une telle préforme composite donnerait une fibre à conservation de la polarisation linéaire.

Un moyen d'augmenter la torsion est de faire simultanément tourner la préforme 8 si le besoin s'avère nécessaire. On peut obtenir un très grand nombre de tours (200/mètre) sur la fibre car on fige cette torsion immédiatement sans qu'il y ait eu risque de rupture par vieillissement et évolution des microfissures.

La figure 5 illustre une variante du procédé de fabrication selon l'invention.

Sur le tambour vertical de l'ensemble 17 a été bobinée une fibre obtenue, par exemple à partir d'une préforme telle que celle représentée en figure 3, par simple étirage. L'ensemble 17 permet de dérouler la fibre 20 de façon à obtenir par pincement dans le dispositif 30 une fibre torsadée 21, qui pénètre dans l'enducteur 11, rempli d'un produit d'enduction 10, préférablement du verre pour des raisons déjà explicitées précédemment, ce verre étant fondu par le moyen de chauffage 12. Le dispositif presseur 30 empêche la fibre de tourner sur elle-même; ce peut être des poulies, des galets, etc... A la suite de l'enducteur 11, le verre de frette appliqué sur la fibre est trempé par les moyens de trempage 13 pour donner une fibre frettée 22.

Cette fibre peut être protégée par des moyens d'enduction tels que l'enducteur 15 et son produit d'enduction 18 et le moyen de traitement 16. On obtient une fibre à structure chiralique 23 bobinée sur un tambour par des moyens d'enroulement à tambour et trancanage classique.

La fibre 23 obtenue à partir d'une préforme telle que celle de la figure 3 est schématisée en figure 7. La fibre torsadée proprement dite est constituée d'un cœur 24 et d'une gaine 25 présentant les propriétés d'une structure chiralique. Elle est frettée par une enveloppe de verre 26, elle-même protégée par une gaine de protection 27.

Les fibres ainsi obtenues par le procédé de l'invention peuvent servir à la réalisation de capteurs optiques, ce peut être par exemple des capteurs de courant électrique.

## Revendications

1. Procédé de fabrication d'un objet (1) à structure chiralique à partir d'une source de matière formable (8) comprenant les étapes d'étirage suivant un axe et de torsion de l'objet (1) autour dudit axe d'étirage et d'enduction de l'objet par un produit en fusion (10), formant une enveloppe (26) jouant le rôle de frette, caractérisé en ce que les étapes d'étirage et de torsion sont réalisées avant l'étape d'enduction et en ce que l'étape d'enduction est suivie immédiatement d'une étape de trempe par refroidissement dudit objet.

2. Procédé selon la revendication 1, caractérisé en ce que les étappes d'étirage et de torsion sont réalisées simultanément à partir d'une masse de matière en fusion provenant de ladite source (8).

3. Procédé selon la revendication 1, caractérisé en ce que les étapes d'étirage et de torsion sont réalisées séquentiellement.

4. Procédé selon la revendication 1, caractérisé en ce que le produit formant l'enveloppe (26) jouant le rôle de frette est en verre.

5. Procédé selon la revendication 1, caractérisé en ce que le produit formant l'enveloppe (26) jouant le rôle de frette est en vitro-céramique.

6. Procédé selon la revendication 1, caractérisé en ce qu'il comporte une étape supplémentaire d'enduction de l'objet par un produit formant une gaine de protection (27).

7. Procédé selon la revendication 6, caractérisé en ce que le produit formant une gaine de protection (27) est du métal.

8. Dispositif pour la mise en œuvre du procédé de fabrication d'un objet (1) à structure chiralique selon l'une quelconque des revendications 1 à 7, comprenant des moyens de fusion (9) d'une source de matière formable (8), formant un volume d'étirage, des moyens d'étirage et de torison (17) dudit objet (1) et des moyens d'enduction (10 à 12) de celui-ci, caractérisé en ce que les moyens d'étirage et de torsion (17) sont agencés pour que l'étirage et la torsion soient réalisés avant l'enduction et en ce qu'il comprend en outre des moyens de trempe (13) occasionnant le refroidissement de l'objet (1) agencés de manière à ce que la trempe s'effectue immédiatement après l'enduction.

9. Dispositif selon la revendication 8, caractérisé en ce que les moyens d'étirage et de torsion sont agencés pour opérer sur ledit objet (1) en simultanéité; cet objet, à la sortie de ces moyens, passant à travers un cône d'enduction (11), pour recevoir une enveloppe (26) jouant le rôle de frette, les moyens de trempe (13) permettant de solidifier cette enveloppe (26) autour de cet objet (1).

10. Dispositif selon la revendication 8, caractérisé en ce que les moyens d'étirage dudit objet (1) sont suivis des moyens de torsion; cet objet (1), à la sortie de ces moyens, passant à travers un cône d'enduction (11) pour recevoir une enveloppe (26) jouant le rôle de frette, les moyens de trempe permettant de solidifier cette enveloppe autour de l'objet.

11. Dispositif selon la revendication 8, caractérisé en ce que la source formant un volume d'étirage est une préforme (8).

12. Dispositif selon la revendication 11, caractérisé en ce que la préforme (8) est en verre.

13. Dispositif selon la revendication 11, caractérisé en ce que la préforme (8) est obtenue par une technique de dépôt chimique en voie gazeuse dite «M.C.V.D.».

14. Dispositif selon la revendication 11, caractérisé en ce que cette préforme (8) comporte deux barreaux (19) soudés symétriquement par rapport à son axe de symétrie.

15. Dispositif selon la revendication 11, caractérsié en ce que le tube de départ de silice de la préforme (8) est dissous.

## Patentansprüche

1. Verfahren zur Herstellung eines Gegenstands (1) mit Torsionsstruktur ausgehend von einer Quelle eines formbaren Materials (8) mit den Verfahrensschritten des Ziehens entlang einer Achse und des Verdrehens des Gegenstands (1) um die Ziehachse sowie des Einlassens des Gegenstands mit einem geschmolzenen Produkt (10), das eine als Schrumpfschlauch wirkende Hülle (26) bildet, dadurch gekennzeichnet, dass die Verfahrensschritte des Ziehens und des Verdrehens vor dem Verfahrensschritt des Einlassens ablaufen und dass der Verfahrensschritt des Einlassens unmittelbar von einem Verfahrensschritt des Abschrekkens gefolgt wird.

2. Verfahren nach Anspruch 1, dadurch gekennzeichnet, dass die Verfahrensschritte des Ziehens und des Verdrehens gleichzeitig ausgehend von einer von der Quelle (8) stammenden Materialmasse im Schmelzzustand ablaufen.

3. Verfahren nach Anspruch 1, dadurch gekennzeichnet, dass die Verfahrensschritte des Ziehens und des Verdrehens nacheinander ablaufen.

4. Verfahren nach Anspruch 1, dadurch gekennzeichnet, dass das die Hülle, die als Schrumpfschlauch wirkt, bildende Produkt aus Glas ist.

5. Verfahren nach Anspruch 1, dadurch gekennzeichnet, dass das die Hülle (26), die als Schrumpfschlauch wirkt, bildende Produkt aus Glaskeramik besteht.

6. Verfahren nach Anspruch 1, dadurch gekennzeichnet, dass es einen zusätzlichen Verfahrensschritt aufweist, bei dem der Gegenstand mit einem Produkt bedeckt wird, das eine Schutzhülle (27) bildet.

7. Verfahren nach Anspruch 6, dadurch gekennzeichnet, dass das eine Schutzhülle (27) bildende Produkt Metall ist.

8. Vorrichtung zur Durchführung des Verfahrens zur Herstellung eines Gegenstands (1) mit Torsionsstruktur gemäss einem der Ansprüche 1 bis 7, mit Mitteln (9) zum Schmelzen einer Quelle formbaren Materials (8), die ein Ziehvolumen bilden, mit Zieh- und Verdrehmitteln (17) für den Gegenstand (1) und mit Einlassmitteln (10 bis 12) zum Beschichten des Gegenstands, dadurch gekennzeichnet, dass die Zieh- und Verdrehmittel (17) so angeordnet sind, dass das Ziehen und das Verdrehen vor dem Einlassen erfolgen, und dass die Vorrichtung ausserdem Abschreckmittel (13) aufweist, durch die der Gegenstand (1) abgekühlt wird und die so angeordnet sind, dass das Abschrecken unmittelbar nach dem Einlassen erfolgt.

9. Vorrichtung nach Anspruch 8, dadurch gekennzeichnet, dass die Zieh- und Verdrehmittel so angeordnet sind, dass sie zugleich auf den Gegenstand (1) einwirken, wobei der Gegenstand am Ausgang dieser Mittel durch einen Beschichtungskonus (11) verläuft, um eine Hülle (26), die als Schrumpfschlauch wirkt, zu empfangen, und wobei die Abschreckmittel (13) die Verfestigung dieser Hülle (26) um diesen Gegenstand (1) herum erlauben.

10. Vorrichtung nach Anspruch 8, dadurch gekennzeichnet, dass die Ziehmittel für den Gegenstand (1) von den Verdrehmitteln gefolgt sind, wobei der Gegenstand (1) am Ausgang dieser Mittel durch einen Beschichtungskonus (11) verläuft, um eine als Schrumpfschlauch wirkende Hülle (26) zu empfangen, und wobei die Abschreckmittel die Verfestigung dieser Hülle um den Gegenstand herum ermöglichen.

11. Vorrichtung nach Anspruch 8, dadurch gekennzeichnet, dass die ein Ziehvolumen bildende Quelle ein Rohling (8) ist.

12. Vorrichtung nach Anspruch 11, dadurch gekennzeichnet, dass der Rohling (8) aus Glas ist.

13. Vorrichtung nach Anspruch 11, dadurch gekennzeichnet, dass der Rohling (8) durch eine Technik der chemischen Abscheidung aus der Gasphase, MCVD genannt, erhalten wird.

14. Vorrichtung nach Anspruch 11, dadurch gekennzeichnet, dass dieser Rohling (8) zwei Stäbe (19) aufweist, die symmetrisch bezüglich der Symmetrieachse des Rohlings angeschweisst sind.

15. Vorrichtung nach Anspruch 11, dadurch gekennzeichnet, dass das Ausgangs-Siliciumoxidrohr des Rohlings (8) gelöst ist.

## Claims

1. A method for manufacturing an object having a chiralic structure obtained from a shapeable material source (8) and comprising the steps of drawing the object along an axis and of twisting the object (1) about the drawing axis and of coating the object with a molten product (10) forming an envelope (26) which acts as a hoop, characterized in that the drawing and twisting steps are performed prior to the coating step and that the coating step is immediately followed by a hardening stop during which the object is cooled down.

2. A method according to claim 1, characterized in that the drawing and twisting steps are performed simultaneously from a molten material mass coming from said source (8).

3. A method according to claim 1, characterized in that the drawing and twisting steps are perfomed one after the other.

4. A method according to claim 1, characterized in that the product forming envelope (26) and acting as a hoop is glass.

5. A method according to claim 1, characterized in that the product forming the envelope (26) and acting as a hoop is a vitroceramic material.

6. A method according to claim 1, characterized in that it includes a supplementary step of coating the object with a product forming a protective sheath (27).

7. A method according to claim 6, characterized in that the product forming a protective sheath (27) is metal.

8. A device for performing the method of manufacturing an object (1) having a chiralic structure according to any one of claims 1 to 7, comprising means (9) for melting a source of formable material (8) constituting a drawing volume, drawing and twisting means (17) for said object (1) and coating means (10 to 12) for coating the object, characterized in that the drawing and twisting means (17) are arranged in such a way that the drawing and the twisting steps are realized prior to the coating step and that it further comprises hardening means (13) which are made to cool the object (1) down and which are arranged in such a way that the hardening takes place immediately after the coating step.

9. A device according to claim 8, characterized in that the drawing and twisting means are arranged for operating on said object (1) simultaneously, this object passing at the output of these means through a coating cone (11) for receiving an envelope (26) acting as hoop, the hardening means (13) solidifying said envelope (26) around the object (1).

10. A device according to claim 8, characterized in that the means for drawing the object (1) are followed by the twisting means, the object (1) passing at the output of these means through a coating cone (11) for receiving an envelope (26) which acts as hoop, the hardening means solidifying this envelope around the object.

11. A device according to claim 8, characterized in that the source forming a drawing volume is a preform (8).

12. A device according to claim 11, characterized in that the preform (8) is made of glass.

13. A device according to claim 11, characterized in that the preform (8) is obtained by a technique of chemical deposition from the gaseous phase, called MCVD.

14. A device according to claim 11, characterized in that the preform (8) comprises two bars (19) welded symmetrically with respect to its axis of symmetry.

15. A device according to claim 11, characterized in that the initial silica tube of the preform (8) is dissolved.

FIG.1

FIG.2

FIG.3

FIG.6

# FIG.4

FIG.5

FIG.7

FIG. 8

FIG. 9

0 078 733